# FASCICULE DE BREVET EUROPEEN

(11) **EP 3 235 179 B1**
(45) Date de publication et mention de la délivrance du brevet: **03.04.2019**
(21) Numéro de dépôt: 15828350.7
(22) Date de dépôt: 17.12.2015
(51) Int. Cl.: H04L 12/28

(54) **SYSTEME DOMOTIQUE POUR ECHANGER DES INFORMATIONS ENTRE AU MOINS UN TERMINAL MOBILE ET DES APPAREILS DE CHAUFFAGE ET/OU DE CLIMATISATION**
HEIMAUTOMATISIERUNGSSYSTEM ZUM AUSTAUSCH VON INFORMATIONEN ZWISCHEN MINDESTENS EINEM MOBILEN ENDGERÄT UND HEIZ- UND/ODER KLIMATISIERUNGSGERÄTE
HOME-AUTOMATION SYSTEM FOR EXCHANGING INFORMATION BETWEEN AT LEAST ONE MOBILE TERMINAL AND HEATING AND/OR AIR CONDITIONING APPLIANCES

(30) Priorité: 19.12.2014 FR 1462992
(43) Date de publication de la demande: 25.10.2017
(73) Titulaire: Texas De France, 13854 Aix en Provence (FR)
(72) Inventeur: CARLOTTI, Charles, 04800 Greoux les Bains (FR); BLOUIN, Philippe, 13510 Eguilles (FR); VIENNET, Raphaël, 13100 Aix en Provence (FR); LAFFONT, Damien, 13122 Ventabren (FR)
(74) Mandataire: Roman, Alexis
(86) Numéro de dépôt international: PCT/FR2015/053573
(87) Numéro de publication internationale: WO 2016/097622

(56) Documents cités:
- US-A1- 2010 299 639
- US-A1- 2012 062 360
- US-A1- 2013 304 860
- US-A1- 2014 181 199

## Description

### Domaine technique de l'invention.

L'invention a pour objet un système domotique pour échanger des informations entre au moins un terminal mobile et des appareils de chauffage et/ou de climatisation.

Elle concerne le domaine technique de la transmission de signaux sans fil, entre un terminal mobile et des appareils électriques domestiques, et plus particulièrement la transmission de signaux permettant de contrôler le fonctionnement d'appareils de chauffage et/ou de climatisation.

### État de la technique.

De nombreuses habitations sont aujourd'hui équipées de systèmes domotiques permettant de contrôler, grâce à un terminal mobile (Smartphone, tablette tactile,...), des appareils électriques domestiques tels que des appareils de chauffage et/ou climatisation, des éclairages, des volets roulants, des portes, etc. Diverses techniques existent pour contrôler le fonctionnement de ces appareils domestiques.

On connaît par exemple par le document brevet US 2012/0248207 (DRAKE), un système permettant de contrôler la température d'un appareil de chauffage et/ou climatisation. Dans ce document, un Smartphone émet un signal de commande à destination d'un contrôleur central. Ce dernier active l'appareil avec lequel il peut communiquer. La communication entre le Smartphone et l'appareil passe donc obligatoirement par le contrôleur central. En pratique, ce type de contrôleur central est onéreux, encombrant, et nécessite un câblage supplémentaire dans l'habitation.

On connaît également par le document brevet US 2010/0204834 (COMERFORD), un radiateur équipé d'un thermostat qui s'active dès qu'il détecte la présence d'un signal radiofréquence émis par un Smartphone. L'intérêt de cette technique est limité dans la mesure où le thermostat ne permet de contrôler qu'un seul appareil à la fois.

On connaît encore par le document brevet US 2014/017630 (KOTLICKI), un système comportant : - une zone de contrôle géographiquement délimitée dans l'espace ; - au moins un terminal mobile adapté pour émettre et recevoir, dans la zone de contrôle, des signaux radiofréquences ; - des appareils électriques installés dans la zone de contrôle, et plus particulièrement dans des sous-zones. Chaque appareil électrique est associé à une balise installée dans chaque sous-zone. Ces balises sont physiquement dissociées des appareils électriques. Dès qu'une balise détecte un signal émis par un Smartphone, cette balise active le fonctionnement de l'appareil électrique. L'utilisation de ces balises permet de contrôler plusieurs appareils à la fois. Toutefois, elle nécessite une installation complexe, et un câblage supplémentaire dans l'habitation.

Le document brevet US 2013/304860 (YANG) décrit un procédé pour commander l'émission et la réception de contenu entre des dispositifs UPnP (Universal Plug and Play). Ce procédé comprend les étapes suivantes : la recherche d'une pluralité de dispositifs UPnP ; la réception, en provenance d'au moins un des dispositifs UPnP découverts, des adresses CEC desdits dispositifs UPnP ainsi que de l'adresse CEC d'un dispositif connecté par l'intermédiaire d'une interface HDMI ; la vérification, au moyen des adresses CEC reçues, de la connexion HDMI entre un dispositif source et un dispositif récepteur faisant partie des dispositifs UPnP découverts ; et la commande du contenu à transmettre en continu par le biais de la connexion HDMI entre le dispositif source et le dispositif récepteur. Ce procédé est particulièrement complexe à mettre en oeuvre.

Dans le document brevet US 2012/0062360 (WENDT), plusieurs appareils sont contrôlés par un contrôleur central. Ce dernier est relié à un émetteur dont la zone d'émission englobe chacun des appareils. Par l'intermédiaire d'un terminal mobile, un utilisateur peut transmettre des commandes au contrôleur central. Ces commandes sont ensuite transmises aux appareils via l'émetteur. Cette installation est complexe et nécessite un câblage supplémentaire du contrôleur central et de l'émetteur dans l'habitation.

L'invention vise à remédier à cet état des choses. En particulier, un objectif de l'invention est de pouvoir échanger simplement et efficacement des informations entre un terminal mobile et plusieurs appareils de chauffage et/ou climatisation, sans qu'il soit nécessaire d'installer et de câbler des éléments de contrôle supplémentaires.

Un objectif supplémentaire de l'invention est de proposer une solution technique qui soit peu onéreuse, facile à installer, et dont l'utilisation est aisée.

### Divulgation de l'invention.

La solution proposée par l'invention est un système domotique comportant : - une zone de contrôle géographiquement délimitée dans l'espace ; - au moins un terminal mobile adapté pour émettre et recevoir, dans la zone de contrôle, des signaux radiofréquences ; - plusieurs appareils électriques domestiques installés dans la zone de contrôle, tout ou partie desdits appareils étant des appareils de chauffage et/ou climatisation.

Ce système domotique est remarquable en ce que : - chaque appareil intègre un émetteur et un récepteur de signaux radiofréquences ; - les appareils sont agencés en réseau de manière à communiquer pour véhiculer des informations entre eux, lesdites informations véhiculées étant des commandes pour contrôler le fonctionnement desdits appareils de chauffage et/ou climatisation, laquelle communication est réalisée par l'émission et la réception, dans la zone de contrôle, de signaux radiofréquences contenant lesdites informations ; - la communication entre les appareils du réseau est initiée en réponse à la réception, par au moins un des appareils dudit réseau, d'un signal radiofréquence émis par le terminal mobile dans la zone de contrôle, lequel signal contient des commandes pour contrôler directement le fonctionnement des appareils de chauffage et/ou climatisation et réguler chacune de leur température autour d'une valeur prédéfinie ; - en réponse à la réception du signal radiofréquence émis par le terminal mobile dans la zone de contrôle, le premier appareil qui reçoit ledit signal modifie son état de fonctionnement et régule sa température autour de la valeur prédéfinie, dans le cas où ledit premier appareil est un appareil de chauffage et/ou climatisation, puis émet, dans le réseau, un signal radiofréquence contenant des commandes pour contrôler le fonctionnement des autres appareils ; - en réponse à la réception du signal radiofréquence émis par le premier appareil dans le réseau, chaque autre appareil de chauffage et/ou climatisation modifie son état de fonctionnement et régule sa température autour de la valeur prédéfinie.

Les avantages liés à cette invention sont nombreux. Tout d'abord, un émetteur/récepteur de signaux radiofréquences se présente généralement sous la forme d'un composant électronique de faible dimension, peu onéreux, et qui peut facilement être intégré parmi les autres composants électroniques de l'appareil. Il n'est donc pas nécessaire de prévoir un élément de contrôle annexe à l'appareil.

De plus, l'architecture en réseau qui est proposée, permet de faire circuler très simplement des informations, directement entre les appareils électriques, notamment des informations permettant de contrôler le fonctionnement d'appareils de chauffage et/ou climatisation, alors même que d'autres appareils du réseau ne sont pas nécessairement des appareils de chauffage et/ou climatisation.

En outre, seule l'émission d'un signal radiofréquence par le terminal mobile suffit pour initier la communication des appareils, ce signal contenant des instructions de commande spécifiques.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaire :
- Le signal radiofréquence émis par le terminal mobile peut contenir des commandes pour contrôler le fonctionnement des appareils de chauffage et/ou climatisation et réguler chacune de leur température autour d'une valeur prédéfinie, pendant une période prédéfinie.
- Les appareils du réseau peuvent communiquer entre eux, de proche en proche.
- Le terminal mobile peut être adapté pour émettre automatiquement, de manière continue ou par intermittence, un signal radiofréquence dans la zone de contrôle, lequel signal contient les commandes pour contrôler le fonctionnement des appareils de chauffage et/ou climatisation.
- Si aucun des appareils du réseau ne réceptionne un signal radiofréquence émis par le terminal mobile, dans la zone de contrôle, pendant une période déterminée, alors chacun des appareils de chauffage et/ou climatisation peut modifier son état de fonctionnement.
- Un ou plusieurs autres terminaux mobiles peuvent être adaptés pour émettre et recevoir, dans la zone de contrôle, des signaux radiofréquences ; - tous les terminaux mobiles sont associés à un rang de priorité par rapport à chacun des appareils de chauffage et/ou climatisation ; - le contrôle du fonctionnement de chaque appareil de chauffage et/ou climatisation est basé sur les rangs de priorité des terminaux mobiles.
- Le signal radiofréquence émis par le terminal mobile peut être initié manuellement par l'utilisateur dudit terminal.
- Chaque appareil électrique domestique du réseau est préférentiellement adapté pour émettre et recevoir des signaux radiofréquence dans une zone d'émission/réception qui lui est propre ; - les appareils électriques domestiques du réseau sont programmés pour émettre de manière continue ou périodique des requêtes contenant une information d'activation propre à être reconnue par le terminal mobile de sorte que lorsque ledit terminal pénètre dans une des zones d'émission/réception, alors ledit terminal réceptionne ces requêtes ; - si le terminal mobile reconnaît l'information d'activation, alors ledit terminal émet automatiquement un signal radiofréquence contenant les commandes permettant de contrôler le fonctionnement des appareils de chauffage et/ou climatisation.
- Le premier appareil peut être celui recevant le signal radiofréquence émis par le terminal mobile avec l'intensité la plus forte.
- Chaque appareil peut intégrer un processeur et une mémoire dans laquelle sont enregistrés un ou plusieurs programmes dont les instructions, lorsqu'elles sont exécutées par ledit processeur, permettent de déterminer des données de fonctionnement propre à l'appareil, telles que les périodes d'activation dudit appareil, et/ou la consommation énergétique dudit appareil, lesquelles données sont enregistrées dans ladite mémoire.
- Le signal radiofréquence émis par le terminal mobile, dans la zone de contrôle, peut contenir contient une requête ; - en réponse à la réception du signal radiofréquence émis par le terminal mobile, le premier appareil qui reçoit ledit signal avec l'intensité la plus forte et/ou qui est situé dans la zone d'émission/réception dudit terminal mobile, émet, dans le réseau, un signal radiofréquence, ce dernier contenant une requête identique ou similaire à celle contenue dans le signal radiofréquence émis par le terminal mobile ; - en réponse à la réception du signal radiofréquence émis par le premier appareil, les autres appareils émettent, dans le réseau, et à destination dudit premier appareil, des signaux radiofréquences contenant les données enregistrées dans leur mémoire ; - en réponse à la réception de toutes les données enregistrées dans les mémoires des autres appareils, le premier appareil émet, à destination du terminal mobile, lesdites données reçues desdits autres appareils, ainsi que les données enregistrées dans sa propre mémoire.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 illustre un système conforme à l'invention, selon un premier mode de réalisation,
- la figure 2 illustre un système conforme à l'invention, selon un second mode de réalisation,
- la figure 3 schématise un réseau d'appareils électriques conformes à l'invention, et auquel est connecté un terminal mobile,
- la figure 4 illustre un terminal mobile adapté pour télécharger une application informatique sur un serveur distant,
- la figure 5 est une représentation schématique d'un appareil électrique conçu pour être utilisé dans un système conforme à l'invention.

Les éléments communs aux différents modes de réalisation, présentent la même référence sur les figures annexées.

### Modes préférés de réalisation de l'invention.

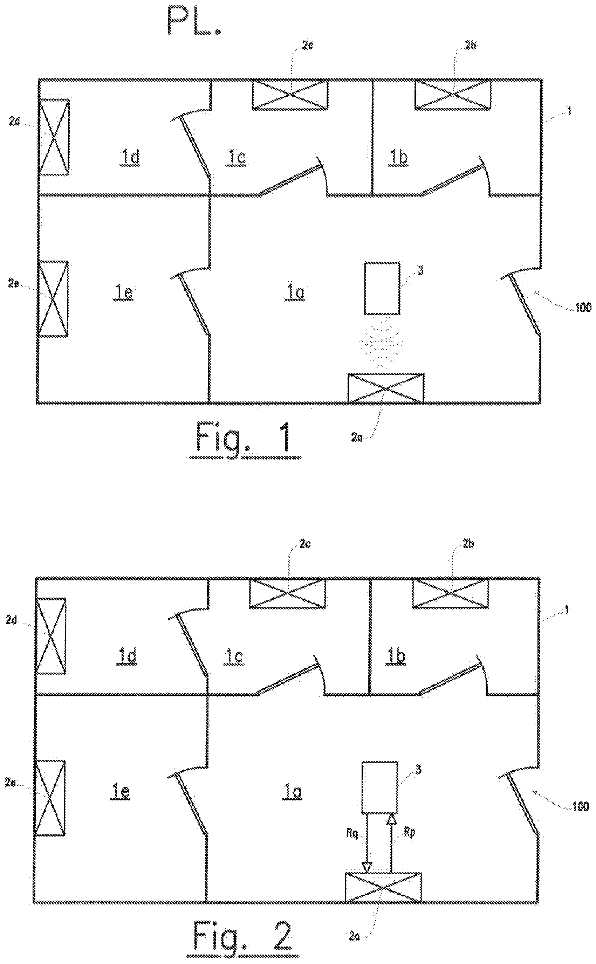

Sur les figures 1 et 2, le système objet de l'invention comprend une zone contrôlée 1, qui est géographiquement délimitée dans l'espace. Cette zone contrôlée peut consister en une ou plusieurs pièces d'un bâtiment, d'une habitation, d'un bureau, d'un hôtel, etc.

Cette zone contrôlée 1 est préférentiellement physiquement délimitée par des parois du type mur. Elle peut toutefois avoir des limites virtuelles qui correspondent par exemple à des coordonnées GPS. Dans ce dernier cas, la zone contrôlée peut par exemple consister en une ou plusieurs rues et/ou portions de rue d'une ville.

Cette zone contrôlée 1 peut être divisée en sous-zones 1a, 1b, 1c, 1d, 1e. La sous-zone 1a correspond par exemple au hall d'entrée d'une habitation, les sous zones 1c et 1e à des chambres, la sous-zone 1b un bureau, et la sous-zone 1d à une salle de bain.

La zone de contrôle 1 est avantageusement pourvue d'un seuil 100 par lequel un utilisateur peut entrer et sortir de ladite zone. Ce seuil 100 est par exemple matérialisé par une porte d'entrée. Il peut également s'agir d'un seuil virtuel correspondant à un point GPS spécifique.

Sur les figures 1 et 2, chaque sous-zone 1a, 1b, 1c, 1d, 1e présente un appareil électrique domestique, respectivement 2a, 2b, 2c, 2d, 2e. Ces appareils électriques domestiques sont préférentiellement des appareils de chauffage et/ou climatisation. Certains d'entre eux peuvent toutefois se présenter sous la forme d'autres appareils électriques domestiques, tels que des éclairages, des volets roulants, des portes, etc.

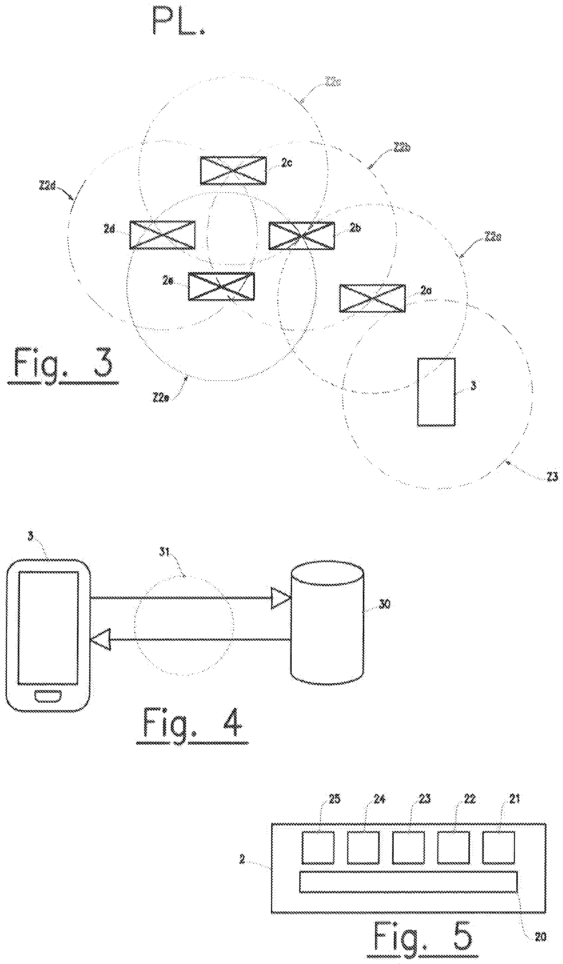

La figure 5 schématise un exemple de réalisation d'un appareil électrique domestique 2 utilisé dans le système objet de l'invention. Sur cette figure 5, l'appareil 2 est un radiateur électrique comprenant un élément chauffant 20, par exemple du type coeur de chauffe en fonte avec résistance électrique.

L'appareil 2 intègre un récepteur 21 de signaux radiofréquences adaptés pour recevoir des signaux radiofréquences transmis sans fil à partir d'un terminal mobile 3 ou à partir d'un autre appareil électrique installé dans la zone de contrôle 1. Ces signaux radiofréquences sont préférentiellement des signaux utilisant un protocole Bluetooth, d'autres protocoles tels que : ISM, Wifi, ANT, ZIGBEE, .., pouvant toutefois être utilisés. On peut par exemple utiliser un périphérique Bluetooth commercialisé par la société PANASONIC® sous la référence PAN1026-SPP-KIT, ou encore un module Wifi commercialisé par la société LANTRONIX® sous la référence XPW100100B-01.

L'appareil 2 intègre en outre un émetteur 22 de signaux radiofréquences utilisant des protocoles du type Bluetooth, ISM, Wifi, ANT, ZIGBEE, etc. Cet émetteur 22 est adapté pour émettre des signaux radiofréquences pour communiquer sans fil avec le terminal mobile 3 et/ou avec les autres appareils installés dans la zone de contrôle 1. L'émetteur 22 se présente par exemple sous la forme d'un module Bluetooth commercialisé par la société PANASONIC® sous la référence PAN1327/1317, ou encore un module Wifi commercialisé par la société LANTRONIX® sous la référence XPW100100B-01.

Le récepteur 21 et l'émetteur 22 se présentent préférentiellement sous la forme d'un composant électronique unique, du type émetteur/récepteur Bluetooth, ISM, Wifi, ANT, ZIGBEE, etc. Il est à noter que les composants référencés ci-dessus sont notamment de ce type. On utilise toutefois avantageusement un module Bluetooth NRF51422 BLE+ANT fabriqué par la société NORDICSEMI®.

Le terminal mobile 3 est ainsi adapté pour émettre et recevoir des signaux radiofréquence dans une zone d'émission/réception Z3 qui lui est propre (figure 3).

L'appareil 2 comprend également un processeur 23 et une mémoire 24. Le processeur 23 est en communication avec le récepteur 21, l'émetteur 22, et la mémoire 24. Il est notamment adapté pour décoder les signaux reçus par le récepteur 21, et coder les signaux émis par l'émetteur 22. Le processeur 23 est également adapté pour contrôler le fonctionnement de l'appareil 2. Dans le cas où l'appareil 2 est un radiateur, il permet par exemple de fournir un signal de puissance électrique pour activer l'élément chauffant 20 à une température souhaitée.

Un ou plusieurs programmes ou micros-programmes informatiques sont enregistrés dans la mémoire 24. Les instructions de ces programmes ou micros-programmes, lorsqu'elles sont exécutées par le processeur 23, permettent de réaliser les fonctionnalités qui sont décrites plus avant dans la description. La mémoire 24 est également adaptée pour enregistrer un certain nombre d'informations, lesquelles informations sont présentées plus avant dans la description.

Une batterie 25, telle qu'une pile au lithium ou une pile solaire plate, peut assurer l'alimentation électrique des composants électroniques 21, 22, 23, 24. Cette alimentation électrique peut toutefois être directement assurée par celle de l'appareil 2.

Le récepteur 21, l'émetteur 22, le processeur 23, la mémoire 24, et éventuellement la batterie 25, sont préférentiellement fixés sur un circuit électronique déjà intégré dans l'appareil 2, par exemple sur le circuit électronique d'un thermostat.

Le système objet de l'invention comprend également un terminal mobile 3 qui est adapté pour émettre et recevoir, dans la zone de contrôle 1, des signaux radiofréquences du type mentionné précédemment. Le terminal mobile 3 se présente préférentiellement sous la forme d'un Smartphone du type iPhone®, Samsung Galaxy®, iPad®, Samsung Tab®, etc. De manière classique, le terminal mobile 3 intègre un émetteur et un récepteur de signaux infrarouges similaires à ceux décrits précédemment en référence à la figure 5. Toujours de manière classique, le terminal mobile 3 intègre un processeur et une mémoire dans lequel sont enregistrés des programmes ou sous-programmes informatiques, dont les instructions, lorsqu'elles sont exécutées par ledit processeur, permettent de réaliser les fonctionnalités décrites plus avant dans la description.

En particulier, le terminal mobile 3 intègre une application informatique conçue pour permettre audit terminal de communiquer sans fil avec les appareils 2a, 2b, 2c, 2d, 2e installés dans la zone de contrôle 1. En se rapportant à la figure 4, le terminal mobile 3 peut télécharger cette application, depuis un serveur distant 30 qui est accessible depuis le réseau Internet 31. Cette application sert notamment d'interface homme-machine entre le terminal mobile 3 et les appareils 2a, 2b, 2c, 2d, 2e.

L'utilisateur, ou l'installateur, peut alors paramétrer cette application de sorte que le terminal mobile 3 puisse reconnaître et/ou être reconnu par les appareils 2a, 2b, 2c, 2d, 2e installés dans la zone de contrôle 1, et préférentiellement, uniquement par ceux là. On peut par exemple enregistrer, dans la mémoire 24 de chaque appareil 2a, 2b, 2c, 2d, 2e, une information d'identification du terminal mobile 3. Ou, plus simplement, on peut enregistrer dans son terminal mobile 3, une information d'identification de chacun des appareils 2a, 2b, 2c, 2d, 2e.

Les appareils 2a, 2b, 2c, 2d, 2e qui sont installés dans la zone de contrôle 1, sont agencés en réseau de manière à communiquer pour véhiculer des informations entre eux. Cette communication est réalisée par l'émission et la réception, dans la zone de contrôle 1, de signaux radiofréquences contenant lesdites informations. Les récepteurs 21 et les émetteurs 22 assurant l'émission et la réception de ces signaux.

La figure 3 schématise un mode de réalisation permettant d'agencer les appareils 2a, 2b, 2c, 2d, 2e en réseau. Chaque appareil 2a, 2b, 2c, 2d, 2e est adapté pour émettre et recevoir des signaux radiofréquence dans une zone d'émission/réception qui lui est propre, respectivement Z2a, Z2b, Z2c, Z2d, Z2e. Ces zones d'émission/réception Z2a, Z2b, Z2c, Z2d, Z2e dépendent en partie de la puissance des récepteurs 21 et des émetteurs 22. Leur configuration peut en outre être réglée par l'orientation d'une ou plusieurs antennes directionnelles associées aux récepteurs 21 et/ou aux émetteurs 22. Cette orientation des antennes peut être préalablement effectuée par un installateur.

Les appareils 2a, 2b, 2c, 2d, 2e sont disposés dans la zone de contrôle 1 de sorte que la zone d'émission/réception d'un appareil inclut au moins un autre appareil. La juxtaposition de toutes les zones d'émission/réception Z2a, Z2b, Z2c, Z2d, Z2e permet d'inclure tous les appareils 2a, 2b, 2c, 2d, 2e du réseau.

Pour assurer une transmission optimale des informations dans le réseau, chaque appareil 2a, 2b, 2c, 2d, 2e du réseau est adapté pour communiquer avec le ou les autres appareils du réseau qui sont situés dans sa propre zone d'émission/réception Z2a, Z2b, Z2c, Z2d, Z2e.

Sur l'exemple de la figure 3, la zone d'émission/réception Z2a de l'appareil 2a inclut l'appareil 2b. Elle chevauche une partie de la zone d'émission/réception Z2b.

La zone d'émission/réception Z2b de l'appareil 2b inclut l'appareil 2a, l'appareil 2c et l'appareil 2e.

La zone d'émission/réception Z2c de l'appareil 2c inclut l'appareil 2b et l'appareil 2d.

La zone d'émission/réception Z2d de l'appareil 2d inclut l'appareil 2c et l'appareil 2e.

La zone d'émission/réception Z2e de l'appareil 2e inclut l'appareil 2d et l'appareil 2b.

Ainsi, toutes les zones d'émission/réception Z2a, Z2b, Z2c, Z2d, Z2e se juxtaposent pour inclure tous les appareils 2a, 2b, 2c, 2d, 2e du réseau. Et chaque appareil 2a, 2b, 2c, 2d, 2e peut communiquer avec le ou les autres appareils du réseau qui sont situés dans sa propre zone d'émission/réception Z2a, Z2b, Z2c, Z2d, Z2e. Par exemple, l'appareil 2a communique uniquement avec l'appareil 2b tandis que ce dernier peut communiquer non seulement avec l'appareil 2a mais également avec les appareils 2c et 2e.

Sur la figure 3, la zone de contrôle 1 n'est pas totalement couverte par les zones d'émission/réception Z2a, Z2b, Z2c, Z2d, Z2e. Toutefois, pour assurer une mise en oeuvre optimale de l'invention, il est avantageux que la juxtaposition de toutes les zones d'émission/réception Z2a, Z2b, Z2c, Z2d, Z2e couvre toute la zone de contrôle 1.

Dans l'hypothèse où une information doit être véhiculée de l'appareil 2a vers l'appareil 2e, un jeu d'émission et de réception de signaux de signaux radiofréquences contenant cette information, permet de faire circuler cette dernière. Cette information va être émise par l'appareil 2a pour être réceptionnée par l'appareil 2b. Ce dernier va réémettre l'information vers l'appareil 2c qui va la réceptionner. L'appareil 2c va réémettre l'information vers l'appareil 2d qui va la réceptionner. Et enfin, l'appareil 2d va réémettre l'information vers l'appareil 2e qui va la réceptionner. Dans ce cas, tous les appareils 2a, 2b, 2c, 2d, 2e communiquent entre eux, de proche en proche.

Lorsque l'information est réceptionnée par l'appareil 2b, ce dernier va pouvoir également la réémettre directement vers l'appareil 2e, sans passer par les autres appareils 2c et 2d du réseau. Dans ce cas, les appareils 2a, 2b, 2c, 2d, 2e ne communiquent plus de proche en proche, mais choisissent le chemin le plus court pour véhiculer l'information entre l'appareil de départ 2a et l'appareil d'arrivée 2e.

Bien évidemment, l'information qui circule dans le réseau n'est pas nécessairement exploitée par un seul des appareils. Elle peut également être exploitée par chacun des appareils du réseau. Elle peut encore n'être exploitée par certains appareils du réseau, les autres appareils du réseau servant uniquement de relais ou de répéteur.

La communication entre les appareils 2a, 2b, 2c, 2d, 2e peut être unidirectionnelle. Dans ce cas, des informations sont seulement émises depuis l'un des appareils du réseau, par exemple 2a, à destination des autres appareils, par exemple 2b, 2c, 2d, 2e. Ces autres appareils récepteurs 2b, 2c, 2d, 2e ne renvoyant pas d'informations à l'appareil émetteur 2a.

La communication entre les appareils 2a, 2b, 2c, 2d, 2e peut également être bidirectionnelle. Chaque appareil, ou seulement certains d'entre eux, ont ainsi la possibilité d'échanger (c'est-à-dire recevoir et émettre) des informations avec les autres appareils.

Conformément à l'invention, la communication entre les appareils 2a, 2b, 2c, 2d, 2e du réseau (c'est-à-dire la transmission des informations) est initiée en réponse à la réception, par au moins un des appareils dudit réseau, d'un signal radiofréquence émis par le terminal mobile 3, dans la zone de contrôle 1. En d'autres termes, dès que le terminal mobile 3 se connecte à l'un quelconque des appareils 2a, 2b, 2c, 2d, 2e, alors des informations sont véhiculées dans le réseau.

Le signal radiofréquence émis par le terminal mobile 3 peut être initié manuellement par l'utilisateur dudit terminal, ou automatiquement, sans que cet utilisateur n'ait à intervenir. Ce signal radiofréquence peut être émis de façon continue ou par intermittence, par exemple toutes les secondes, toutes les 10 secondes, ou préférentiellement toutes les 30 minutes, voire toutes les heures.

Différents exemples de mise en oeuvre du système objet de l'invention vont maintenant être décrits en référence aux figures 1 et 2.

### Premier exemple de mise en oeuvre de l'invention : figure 1.

Dans ce mode de réalisation, tout ou parties des appareils 2a, 2b, 2c, 2d, 2e du réseau sont des appareils électriques de chauffage et/ou climatisation. Les appareils électriques sont du type VMC, radiateurs d'appoint mobiles ou fixes, radiateurs sèche-serviettes, etc. Les appareils de climatisation sont typiquement des VMC par exemple du type décrit dans le document brevet précité US 2014/017630.

Les appareils 2a, 2c et 2e sont des appareils électriques domestiques, tous ces appareils ou certain d'entre eux étant de appareils de chauffage et/ou climatisation.

Le système objet de l'invention est utilisé pour contrôler le fonctionnement de ces appareils. Plus particulièrement, les informations véhiculées dans le réseau, entre ces appareils 2a, 2b, 2c, 2d, 2e, sont des commandes pour contrôler le fonctionnement des appareils de chauffage et/ou climatisation 2a, 2c et 2e. Il peut s'agir par exemple d'une consigne pour réguler une température autour d'une valeur déterminée et/ou d'un temps de chauffage ou de climatisation. Cette consigne, lorsqu'elle est reçue par l'appareil concerné, va par exemple permettre de générer un signal de puissance électrique à destination d'un thermostat associé audit appareil.

Le terminal mobile 3 émet un signal radiofréquence dans la zone de contrôle 1. Ce signal contient des informations permettant de contrôler le fonctionnement des appareils de chauffage et/ou climatisation 2a, 2c et 2e.

Préférentiellement, le terminal mobile 3 émet automatiquement, de manière continue ou par intermittence, ce signal radiofréquence dans la zone de contrôle 1.

Les appareils 2a, 2b, 2c, 2d, 2e peuvent être programmés pour émettre de manière continue ou périodique des requêtes contenant une information d'activation propre à être reconnue par le terminal mobile 3. Ainsi, lorsque ce dernier pénètre dans la zone de contrôle 1, et plus particulièrement dans une des zones d'émission/réception Z2a, Z2b, Z2c, Z2d, Z2e, alors ledit terminal peut réceptionner ces requêtes. S'il reconnaît l'information d'activation, alors il émet automatiquement un signal radiofréquence contenant les commandes permettant de contrôler le fonctionnement des appareils de chauffage et/ou climatisation 2a, 2c et 2e. Ces commandes sont alors véhiculées dans le réseau comme cela a été décrit précédemment en référence à la figure 3.

De cette manière, dès que le terminal mobile 3 (i.e. l'utilisateur) se trouve dans la zone de contrôle 1, les appareils de chauffage et/ou climatisation 2a, 2c et 2e modifient automatiquement et instantanément leur état de fonctionnement.

Selon une première variante de réalisation non couverte par l'invention revendiquée, chaque appareil de chauffage et/ou climatisation 2a, 2c et 2e est programmé pour, lorsque son fonctionnement est actif, réguler sa température autour d'une valeur prédéfinie. Ils sont par exemple programmés pour fonctionner selon différents modes. Un mode confort, où la température ambiante est régulée autour de 20°C. Un mode économique où la température ambiante est régulée autour de 17°C. Et éventuellement un mode hors gel dans lequel l'appareil se met en marche dès que la température ambiante est inférieure à 7°C. Les températures de régulation qui sont programmées en mode confort et/ou en mode économique peuvent varier d'un appareil à l'autre. Par exemple :
- l'appareil 2a peut être programmé pour, lorsqu'il est en mode confort, réguler sa température à 24°C pendant 30 minutes, puis à 21 °C pendant 2 heures, puis de nouveau à 24°C pendant 30 minutes, et ainsi de suite. En mode économique, il peut être programmé pour réguler sa température à 19°.
- en mode confort, l'appareil 2c peut être programmé pour réguler constamment sa température à 21°C et en mode économique, réguler sa température à 18°.
- en mode confort, l'appareil 2e peut être programmé pour réguler constamment sa température à 22°C et en mode économique, réguler sa température à 19°C pendant 12 heures, puis à 16°C pendant les 12 prochaines heures, et ainsi de suite.

Les informations qui vont être véhiculées dans le réseau, par l'ensemble des appareils, vont permettre de déclencher la programmation des appareils de chauffage et/ou climatisation 2a, 2c et 2e.

Selon une seconde variante de réalisation conforme à l'invention revendiquée, le signal radiofréquence émis par le terminal mobile 3 contient des commandes pour contrôler directement le fonctionnement des appareils de chauffage et/ou climatisation 2a, 2c et 2e et réguler chacune de leur température autour d'une valeur prédéfinie, éventuellement pendant une période prédéfinie. Ce sont donc les informations qui vont être véhiculées dans le réseau, par l'ensemble des appareils, qui vont directement contrôler le fonctionnement des appareils de chauffage et/ou climatisation 2a, 2c et 2e.

Quelle que soit la variante de réalisation, les appareils de chauffage et/ou climatisation sont par exemple initialement en mode économique. En réponse à la réception du signal radiofréquence émis par le terminal mobile 3 dans la zone de contrôle 1, le premier appareil 2a qui reçoit le signal, va initier un certain nombre d'actions. Le premier appareil 2a est celui qui reçoit le signal avec l'intensité la plus forte et/ou celui qui est situé dans la zone d'émission/réception Z3 du terminal mobile 3.

Si ce premier appareil 2a est un appareil de chauffage et/ou climatisation, alors cet appareil va modifier son état de fonctionnement. Il va par exemple passer du mode économique au mode confort, ce passage se faisant directement ou de manière graduée dans le temps. Ce premier appareil 2a de chauffage et/ou climatisation va ensuite, ou simultanément, émettre dans le réseau, un signal radiofréquence.

Dans le cadre de la première variante de réalisation, le signal radiofréquence émis par le premier appareil 2a, contient une information adaptée pour déclencher l'un des programmes de régulation enregistré dans les autres appareils de chauffage et/ou climatisation 2c, 2e.

Dans le cadre de la seconde variante de réalisation, le signal radiofréquence émis par le premier appareil 2a, contient des commandes pour activer directement le fonctionnement des autres appareils de chauffage et/ou climatisation 2c, 2e. Ces commandes sont celles initialement contenues dans le signal radiofréquence émis par le terminal mobile 3. Il peut toutefois s'agir de commandes se présentant sous une forme différente, et permettant de contrôler de la même manière le fonctionnement des autres appareils de chauffage et/ou climatisation 2c, 2e.

Dans le cas où ce premier appareil n'est un appareil de chauffage et/ou climatisation (par exemple un volet roulant 2b), alors cet appareil va seulement émettre, dans le réseau, un signal radiofréquence permettant d'activer le fonctionnement des appareils de chauffage et/ou climatisation 2a, 2c et 2e du réseau.

En tout état de cause, en réponse à la réception du signal radiofréquence émit par le premier appareil 2a dans le réseau, chaque autre appareil de chauffage et/ou climatisation 2c, 2e modifie son état de fonctionnement et régule sa température autour de sa valeur prédéfinie.

Si aucun des appareils 2a, 2b, 2c, 2d, 2e du réseau ne réceptionne un signal radiofréquence émis par le terminal mobile 3, dans la zone de contrôle 1, alors chacun des appareils de chauffage et/ou climatisation 2a, 2c, 2e modifie son état de fonctionnement. Les appareils 2a, 2c, 2e vont par exemple passer du mode confort au mode économique, ce passage se faisant directement ou de manière graduée dans le temps.

Il est avantageux que ce changement d'état de fonctionnement n'intervienne qu'en l'absence de signal radiofréquence émis par le terminal mobile 3 pendant une période déterminée. En effet, il peut arriver que le terminal mobile 3 (i.e. l'utilisateur) soit momentanément en dehors de la zone de contrôle 1, ou en dehors des zones d'émission/réception Z2a, Z2b, Z2c, Z2d, Z2e. Il convient donc que les appareils 2a, 2c, 2e ne passent pas directement en mode économique dans ce cas de figure. Les appareils 2a, 2c, 2e peuvent par exemple être programmés de la manière suivante :
- en l'absence de réception de signal radiofréquence pendant moins de 2 heures : le mode de fonctionnement des appareils 2a, 2c, 2e ne change pas ;
- en l'absence de réception de signal radiofréquence de 2 heures à 24 heures : les appareils 2a, 2c, 2e passent en mode économique ;
- en l'absence de réception de signal radiofréquence pendant plus de 24 heures: les appareils 2a, 2c, 2e passent en mode hors gel.

Selon un mode particulier de réalisation, un ou plusieurs autres terminaux mobiles peuvent être adaptés pour émettre et recevoir, dans la zone de contrôle 1, des signaux radiofréquences. Ces derniers sont du même type que ceux émis par le terminal mobile 3.

Dans le cas où la zone de contrôle 1 est une habitation, le terminal mobile 3 peut être associé aux parents, et d'autres terminaux mobiles aux enfants. Il est dans ce cas avantageux que tous les terminaux mobiles, y compris le terminal mobile 3, soient associés à un rang de priorité par rapport à chacun des appareils de chauffage et/ou climatisation 2a, 2c, 2e. Le contrôle du fonctionnement de chacun de ces appareils 2a, 2c, 2e est avantageusement basé sur les rangs de priorité des terminaux mobiles. Ainsi, chaque terminal mobile peut être utilisé pour déterminer lequel, d'une pluralité de terminaux mobiles présents dans la zone de contrôle 1, permettra de contrôler le fonctionnement des appareils 2a, 2c, 2e.

Par exemple, si seul le terminal mobile 3 des parents est présent dans la zone de contrôle 1, alors ledit terminal mobile peut émettre un signal radiofréquence pour que seul l'appareil 2c installé dans leur chambre 1c passe en mode confort, l'appareil 2e installé dans la chambre 1e des enfants restant en mode économique. Inversement, si seul le terminal mobile des enfants est présent dans la zone de contrôle 1, alors ledit terminal mobile peut émettre un signal radiofréquence pour que seul l'appareil 2e installé dans la chambre 1e passe en mode confort, l'appareil 2c installé dans la chambre 1c des parents restant en mode économique.

Par contre, si tous les terminaux mobiles sont présents dans la zone de contrôle 1, les appareils 2c et 2e vont recevoir simultanément des consignes antagonistes visant à les faire passer dans un mode confort et en même temps dans un mode économique. Les rangs de priorité des terminaux mobiles vont permettre de résoudre ce conflit, de sorte que les deux appareils 2c et 2e passent en mode confort.

### Deuxième exemple de mise en oeuvre de l'invention: figure 2.

Dans ce mode de réalisation, les informations véhiculées dans le réseau, entre les appareils électriques domestiques 2a, 2b, 2c, 2d, 2e, sont des données de fonctionnement propres à chacun desdits appareils.

Les appareils 2a, 2b, 2c, 2d, 2e peuvent tous être, ou certains d'entre eux seulement, des appareils électriques de chauffage et/ou climatisation.

Ces informations concernent par exemple la localisation de chaque appareil 2a, 2b, 2c, 2d, 2e dans la zone de contrôle 1, ses périodes de fonctionnement, sa consommation électrique, les périodes où le terminal mobile 3 a été à proximité dudit appareil, etc. Toutes ces informations peuvent être traitées par les processeurs 23 pour déterminer les habitudes de l'utilisateur associé au terminal mobile 3, et planifier les modalités de fonctionnement de chaque appareil 2a, 2b, 2c, 2d, 2e du réseau.

Plus particulièrement, un ou plusieurs programmes sont enregistrés dans la mémoire 24 de chaque appareil 2a, 2b, 2c, 2d, 2e. Les instructions de ces programmes, lorsqu'elles sont exécutées par le processeur 23, permettent de déterminer des données de fonctionnement propres à l'appareil, telles que les périodes d'activation dudit appareil, et/ou la consommation énergétique dudit appareil, lesquelles données sont ensuite enregistrées dans la mémoire 24. Chaque appareil 2a, 2b, 2c, 2d, 2e du réseau renferme donc des informations qui lui sont propres.

Le système objet de l'invention est utilisé pour que l'utilisateur puisse récupérer ces informations par l'intermédiaire du terminal mobile 3.

Le signal radiofréquence émis par le terminal mobile 3, dans la zone de contrôle 1, contient une requête Rq, laquelle requête comprend des commandes permettant d'interroger chacun des appareils 2a, 2b, 2c, 2d, 2e du réseau, ou seulement certains d'entre eux, pour qu'ils communiquent les informations contenues dans leur mémoire 24.

En réponse à la réception du signal radiofréquence émis par le terminal mobile 3, le premier appareil 2a qui reçoit ledit signal (i.e. l'appareil qui reçoit le signal avec l'intensité la plus forte et/ou celui qui est situé dans la zone d'émission/réception Z3 du terminal mobile 3), émet, dans le réseau, un signal radiofréquence. Ce signal contient une requête identique ou similaire à la requête R.

En réponse à la réception du signal radiofréquence émis par le premier appareil 2a, les autres appareils 2b, 2c, 2d, 2e émettent, dans le réseau, et à destination du premier appareil 2a, des signaux radiofréquences contenant les données enregistrées dans leur mémoire 24. Le premier appareil 2a est maintenant en possession de l'ensemble des données de fonctionnement propre à chaque appareil 2a, 2b, 2c, 2d, 2e du réseau.

En réponse à la réception de toutes ces données, le premier appareil 2a émet (Rp), à destination du terminal mobile 4, lesdites données reçues, ainsi que les données enregistrées dans sa propre mémoire.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- La zone de contrôle 1 n'est pas nécessairement divisée en sous-zone.
- Chaque sous-zone 1a, 1b, 1c, 1d, 1e peut intégrer davantage d'appareils électriques 2a, 2b, 2c, 2d, 2e.
- Certaines sous-zones 1a, 1b, 1c, 1d, 1e peuvent ne pas intégrer d'appareils électriques 2a, 2b, 2c, 2d, 2e.
- Le terminal mobile 3 peut se présenter sous la forme d'une télécommande.

## Revendications

1. Système domotique comportant :
- une zone de contrôle (1) géographiquement délimitée dans l'espace,
- au moins un terminal mobile (3) adapté pour émettre et recevoir, dans la zone de contrôle (1), des signaux radiofréquences,
- plusieurs appareils électriques domestiques (2a, 2b, 2c, 2d, 2e) installés dans la zone de contrôle (1), tout ou partie desdits appareils étant des appareils de chauffage et/ou climatisation (2a, 2c, 2e),
**se caractérisant par le fait que** :
- chaque appareil (2a, 2b, 2c, 2d, 2e) intègre un émetteur (22) et un récepteur (21) de signaux radiofréquences,
- les appareils (2a, 2b, 2c, 2d, 2e) sont agencés en réseau de manière à communiquer pour véhiculer des informations entre eux, lesdites informations véhiculées étant des commandes pour contrôler le fonctionnement desdits appareils de chauffage et/ou climatisation, laquelle communication est réalisée par l'émission et la réception, dans la zone de contrôle (1), de signaux radiofréquences contenant lesdites informations,
- la communication entre les appareils (2a, 2b, 2c, 2d, 2e) du réseau est initiée en réponse à la réception, par au moins un des appareils dudit réseau, d'un signal radiofréquence émis par le terminal mobile (3) dans la zone de contrôle (1), lequel signal contient des commandes pour contrôler directement le fonctionnement des appareils de chauffage et/ou climatisation (2a, 2c, 2e) et réguler chacune de leur température autour d'une valeur prédéfinie,
- en réponse à la réception du signal radiofréquence émis par le terminal mobile (3) dans la zone de contrôle (1), le premier appareil qui reçoit ledit signal dudit terminal mobile:
o modifie son état de fonctionnement et régule sa température autour de la valeur prédéfinie, dans le cas où ledit premier appareil est un appareil de chauffage et/ou climatisation,
o émet, dans le réseau, un signal radiofréquence contenant des commandes pour contrôler le fonctionnement des autres appareils,
- en réponse à la réception du signal radiofréquence émis par le premier appareil dans le réseau, chaque autre appareil de chauffage et/ou climatisation (2a, 2c, 2e) modifie son état de fonctionnement et régule sa température autour de la valeur prédéfinie.

2. Système domotique selon la revendication 1, dans lequel le signal radiofréquence émis par le terminal mobile (3) contient des commandes pour contrôler le fonctionnement des appareils de chauffage et/ou climatisation (2a, 2c, 2e) et réguler chacune de leur température autour de la valeur prédéfinie, pendant une période prédéfinie.

3. Système domotique selon l'une des revendications précédentes, dans lequel les appareils électriques domestiques (2a, 2b, 2c, 2d, 2e) du réseau communiquent entre eux, de proche en proche.

4. Système domotique selon l'une des revendications 1 à 3, dans lequel le terminal mobile (3) est adapté pour émettre automatiquement, de manière continue ou par intermittence, un signal radiofréquence dans la zone de contrôle (1), lequel signal contient les commandes pour contrôler le fonctionnement des appareils de chauffage et/ou climatisation (2a, 2c, 2e).

5. Système domotique selon la revendication 4, dans lequel si aucun des appareils électriques domestiques (2a, 2b, 2c, 2d, 2e) du réseau ne réceptionne un signal radiofréquence émis par le terminal mobile (3), dans la zone de contrôle (1), pendant une période déterminée, alors chacun des appareils de chauffage et/ou climatisation (2a, 2c, 2e) modifie son état de fonctionnement.

6. Système domotique selon l'une des revendications 4 ou 5, dans lequel :
- un ou plusieurs autres terminaux mobiles sont adaptés pour émettre et recevoir, dans la zone de contrôle (1), des signaux radiofréquences,
- tous les terminaux mobiles sont associés à un rang de priorité par rapport à chacun des appareils de chauffage et/ou climatisation (2a, 2c, 2e),
- le contrôle du fonctionnement de chaque appareil de chauffage et/ou climatisation (2a, 2c, 2e) est basé sur les rangs de priorité des terminaux mobiles.

7. Système domotique selon l'une des revendications 1 à 3, dans lequel le signal radiofréquence émis par le terminal mobile (3) est initié manuellement par l'utilisateur dudit terminal.

8. Système domotique selon l'une des revendications 1 à 3, dans lequel :
- chaque appareil électrique domestique (2a, 2b, 2c, 2d, 2e) du réseau est adapté pour émettre et recevoir des signaux radiofréquence dans une zone d'émission/réception (Z2a, Z2b, Z2c, Z2d, Z2e) qui lui est propre,
- les appareils électriques domestiques (2a, 2b, 2c, 2d, 2e) du réseau sont programmés pour émettre de manière continue ou périodique des requêtes contenant une information d'activation propre à être reconnue par le terminal mobile (3) de sorte que lorsque ledit terminal pénètre dans une des zones d'émission/réception (Z2a, Z2b, Z2c, Z2d, Z2e), alors ledit terminal réceptionne ces requêtes,
- si le terminal mobile (3) reconnaît l'information d'activation, alors ledit terminal émet automatiquement un signal radiofréquence contenant les commandes permettant de contrôler le fonctionnement des appareils de chauffage et/ou climatisation (2a, 2c et 2e).

9. Système domotique selon l'une des revendications 1 à 8 dans lequel le premier appareil est celui recevant le signal radiofréquence émis par le terminal mobile (3) avec l'intensité la plus forte.

10. Système domotique selon l'une des revendications 1 à 9, dans lequel chaque appareil électriques domestiques (2a, 2b, 2c, 2d, 2e) intègre un processeur (23) et une mémoire (24) dans laquelle sont enregistrés un ou plusieurs programmes dont les instructions, lorsqu'elles sont exécutées par ledit processeur, permettent de déterminer des données de fonctionnement propre à l'appareil, telles que les périodes d'activation dudit appareil, et/ou la consommation énergétique dudit appareil, lesquelles données sont enregistrées dans ladite mémoire.

11. Système domotique selon la revendication 10, dans lequel :
- le signal radiofréquence émis par le terminal mobile (3), dans la zone de contrôle (1), contient une requête (Rq),
- en réponse à la réception du signal radiofréquence émis par le terminal mobile (3), le premier appareil électrique domestique (2a) qui reçoit ledit signal avec l'intensité la plus forte et/ou qui est situé dans la zone d'émission/réception (Z3) dudit terminal mobile, émet, dans le réseau, un signal radiofréquence, ce dernier contenant une requête identique ou similaire à celle contenue dans le signal radiofréquence émis par le terminal mobile (3),
- en réponse à la réception du signal radiofréquence émis par le premier appareil électrique domestique (2a), les autres appareils électriques domestiques (2b, 2c, 2d, 2e) émettent, dans le réseau, et à destination dudit premier appareil, des signaux radiofréquences contenant les données enregistrées dans leur mémoire (24),
- en réponse à la réception de toutes les données enregistrées dans les mémoires (24) des autres appareils électriques domestiques (2b, 2c, 2d, 2e), le premier appareil électrique domestique (2a) émet, à destination du terminal mobile (3), lesdites données reçues desdits autres appareils, ainsi que les données enregistrées dans sa propre mémoire (24).

## Patentansprüche

1. Heimsystem, umfassend:
- eine Steuerungszone (1), die geografisch im Raum begrenzt ist,
- mindestens ein mobiles Endgerät (3), das geeignet ist, in der Steuerungszone (1), Funkfrequenzsignale zu senden und zu empfangen,
- mehrere elektrische Haushaltsgeräte (2a, 2b, 2c, 2d, 2e), die in der Steuerungszone (1) installiert sind, wobei die gesamten oder ein Teil dieser Geräte Heiz- und/oder Klimatisierungsgeräte (2a, 2c, 2e) sind,
**dadurch gekennzeichnet, dass**
- jedes Gerät (2a, 2b, 2c, 2d, 2e) einen Sender (22) und einen Empfänger (21) von Funkfrequenzsignalen integriert,
- die Geräte (2a, 2b, 2c, 2d, 2e) in einem Netz eingerichtet sind, um zu kommunizieren, um Informationen untereinander auszutauschen, wobei die ausgetauschten Informationen Befehle sind, um den Betrieb der Heiz- und/oder Klimatisierungsgeräte zu steuern, wobei die Kommunikation durch das Senden und den Empfang, in der Steuerungszone (1), von Funkfrequenzsignalen durchgeführt wird, welche die Informationen enthalten,
- die Kommunikation zwischen den Geräten (2a, 2b, 2c, 2d, 2e) des Netzes ansprechend auf den Empfang, durch mindestens eines der Geräte des Netzes, eines Funkfrequenzsignals initiiert wird, das von dem mobilen Endgerät (3) in der Steuerungszone (1) gesendet wird, wobei das Signal Befehle enthält, um direkt den Betrieb der Heiz- und/oder Klimatisierungsgeräte (2a, 2c, 2e) zu steuern, und die Temperatur von jedem um einen vordefinierten Wert zu regeln,
- ansprechend auf den Empfang des Funkfrequenzsignals, das von dem mobilen Endgerät (3) in der Steuerungszone (1) gesendet wird, das erste Gerät, welches das Signal des mobilen Endgeräts empfängt:
o seinen Betriebszustand modifiziert und seine Temperatur um den vordefinierten Wert regelt, in dem Fall, wo das erste Gerät ein Heiz- und/oder Klimatisierungsgerät ist,
o in dem Netz, ein Funkfrequenzsignal sendet, das Befehle enthält, um den Betrieb anderer Geräte zu steuern,
- ansprechend auf den Empfang des Funkfrequenzsignals, das von dem ersten Gerät in dem Netz gesendet wird, jedes andere Heiz- und/oder Klimatisierungsgerät (2a, 2c, 2e) seinen Betriebszustand modifiziert und seine Temperatur um den vordefinierten Wert regelt.

2. Heimsystem nach Anspruch 1,
wobei das Funkfrequenzsignal, das von dem mobilen Endgerät (3) gesendet wird, Befehle enthält, um den Betrieb der Heiz- und/oder Klimatisierungsgeräte (2a, 2c, 2e) zu steuern, und jeweils ihre Temperatur um den vordefinierten Wert, während einer vordefinierten Periode, zu regeln.

3. Heimsystem nach einem der vorhergehenden Ansprüche,
wobei die elektrischen Haushaltsgeräte (2a, 2b, 2c, 2d, 2e) des Netzes sukzessive miteinander kommunizieren.

4. Heimsystem nach einem der Ansprüche 1 bis 3,
wobei das mobile Endgerät (3) geeignet ist, automatisch, kontinuierlich oder intermittierend, ein Funkfrequenzsignal in der Steuerungszone (1) zu senden, wobei das Signal die Befehle enthält, um den Betrieb der Heiz- und/oder Klimatisierungsgeräte (2a, 2c, 2e) zu steuern.

5. Heimsystem nach Anspruch 4,
wobei, wenn keines der elektrischen Haushaltsgeräte (2a, 2b, 2c, 2d, 2e) des Netzes ein Funkfrequenzsignal, das von dem mobilen Endgerät (3) gesendet wird, in der Steuerungszone (1), während einer bestimmten Periode, empfängt, jedes der Heiz- und/oder Klimatisierungsgeräte (2a, 2c, 2e) dann seinen Betriebszustand modifiziert.

6. Heimsystem nach einem der Ansprüche 4 oder 5, wobei:
- ein oder mehrere andere mobile Endgeräte geeignet sind, in der Steuerungszone (1), Funkfrequenzsignale zu senden und zu empfangen,
- alle mobilen Endgeräte mit einem Prioritätsrang in Bezug auf jedes der Heiz- und/oder Klimatisierungsgeräte (2a, 2c, 2e) assoziiert sind,
- die Steuerung des Betriebs jedes Heiz- und/oder Klimatisierungsgeräts (2a, 2c, 2e) auf den Prioritätsrängen der mobilen Endgeräte basiert.

7. Heimsystem nach einem der Ansprüche 1 bis 3,
wobei das Funkfrequenzsignal, das von dem mobilen Endgerät (3) gesendet wird, manuell von dem Benutzer des Geräts initiiert wird.

8. Heimsystem nach einem der Ansprüche 1 bis 3, wobei:
- jedes elektrische Haushaltsgerät (2a, 2b, 2c, 2d, 2e) des Netzes geeignet ist, Funkfrequenzsignale in einer Sende-/Empfangszone (Z2a, Z2b, Z2c, Z2d, Z2e) zu senden und zu empfangen, die zu diesem gehört,
- die elektrischen Haushaltsgeräte (2a, 2b, 2c, 2d, 2e) des Netzes programmiert sind, um kontinuierlich und periodisch Aufforderungen zu senden, welche eine Aktivierungsinformation enthalten, die geeignet ist, von dem mobilen Endgerät (3) derart erkannt zu werden, dass, wenn das Gerät in eine der Sende-/Empfangszonen (Z2a, Z2b, Z2c, Z2d, Z2e) eintritt, das Gerät dann diese Aufforderungen empfängt,
- wenn das mobile Endgerät (3) die Aktivierungsinformation erkennt, das Gerät dann automatisch ein Funkfrequenzsignal sendet, das die Befehle enthält, die es gestatten, den Betrieb der Heiz- und/oder Klimatisierungsgeräte (2a, 2c und 2e) zu steuern.

9. Heimsystem nach einem der Ansprüche 1 bis 8,
wobei das erste Gerät jenes ist, welches das Funkfrequenzsignal empfängt, das von dem mobilen Endgerät (3) mit der stärksten Intensität gesendet wird.

10. Heimsystem nach einem der Ansprüche 1 bis 9,
wobei jedes elektrische Haushaltsgerät (2a, 2b, 2c, 2d, 2e) einen Prozessor (23) und einen Speicher (24) integriert, in dem ein oder mehrere Programme gespeichert sind, deren Instruktionen, wenn sie von dem Prozessor ausgeführt werden, es gestatten, Betriebsdaten zu bestimmen, die zu dem Gerät gehören, wie die Aktivierungsperioden des Geräts und/oder den Energieverbrauch des Geräts, wobei die Daten in dem Speicher gespeichert sind.

11. Heimsystem nach Anspruch 10, wobei:
- das Funkfrequenzsignal, das von dem mobilen Endgerät (3) gesendet wird, in der Steuerungszone (1), eine Aufforderung (Rq) enthält,
- ansprechend auf den Empfang des Funkfrequenzsignals, das von dem mobilen Endgerät (3) gesendet wird, das erste elektrische Haushaltsgerät (2a), welches das Signal mit der stärksten Intensität empfängt, und/oder welches in der Sende-/Empfangszone (Z3) des mobilen Endgeräts angeordnet ist, in dem Netz, ein Funkfrequenzsignal sendet, wobei dieses Letztere eine Aufforderung enthält, die identisch ist mit oder ähnlich jener ist, die in dem Funkfrequenzsignal enthalten ist, das von dem mobilen Endgerät (3) gesendet wird,
- ansprechend auf den Empfang des Funkfrequenzsignals, das von dem ersten elektrischen Haushaltsgerät (2a) gesendet wird, die anderen elektrischen Haushaltsgeräte (2b, 2c, 2d, 2e), in dem Netz, und an das Ziel des ersten Geräts, Funkfrequenzsignale senden, welche die Daten enthalten, die in ihrem Speicher (24) gespeichert sind,
- ansprechend auf den Empfang aller gespeicherten Daten in den Speichern (24) der anderen elektrischen Haushaltsgeräte (2b, 2c, 2d, 2e), das erste elektrische Haushaltsgerät (2a), an das Ziel des mobilen Endgeräts (3), die Daten sendet, die von den anderen Geräten empfangen werden, sowie die Daten, die in seinem eigenen Speicher (24) gespeichert sind.

## Claims

1. Home automation system comprising:
- a control zone (1) that is geographically defined in the space;
- at least one mobile terminal (3) adapted to transmit and receive radio-frequency signals in the control zone (1) ;
- a plurality of domestic electrical appliances (2a, 2b, 2c, 2d, 2e) installed in the control zone (1), all or some of said appliances being heating and/or air conditioning appliances (2a, 2c, 2e),
**characterized in that:**
- each appliance (2a, 2b, 2c, 2d, 2e) integrates a radio-frequency signal transmitter (22) and receiver (21) ;
- the appliances (2a, 2b, 2c, 2d, 2e) are arranged as a network so as to communicate in order to convey information between them, said conveyed information being commands for controlling the operation of said heating and/or air conditioning appliances, which communication is performed by transmitting and receiving, in the control zone (1), radio-frequency signals containing said information;
- the communication between the appliances (2a, 2b, 2c, 2d, 2e) of the network is initiated in response to the reception, by at least one of the appliances of said network, of a radio-frequency signal transmitted by the mobile terminal (3) in the control zone (1), which signal contains commands for directly controlling the operation of the heating and/or air conditioning appliances (2a, 2c, 2e) and for adjusting each of the temperatures thereof around a predefined value;
- in response to the reception of the radio-frequency signal transmitted by the mobile terminal (3) in the control zone (1), the first appliance that receives said signal from said mobile terminal:
o changes its operating state and adjusts its temperature around the predefined value, when said first appliance is a heating and/or air conditioning appliance;
o transmits, in the network, a radio-frequency signal containing commands for controlling the operation of the other appliances;
- in response to the reception of the radio-frequency signal transmitted by the first appliance in the network, each one of the other heating and/or air conditioning appliances (2a, 2c, 2e) changes its operating state and adjusts its temperature around the predefined value.

2. Home automation system according to Claim 1, wherein the radio-frequency signal transmitted by the mobile terminal (3) contains commands for controlling the operation of the heating and/or air conditioning appliances (2a, 2c, 2e) and for adjusting the temperature of each appliance around the predefined value, during a predefined period.

3. Home automation system according to any of the preceding claims, wherein the domestic electrical appliances (2a, 2b, 2c, 2d, 2e) of the network communicate together, stepwise.

4. Home automation system according to any of Claims 1 to 3, wherein the mobile terminal (3) is adapted to automatically transmit, continuously or intermittently, a radio-frequency signal in the control zone (1), which signal contains the commands for controlling the operation of the heating and/or air conditioning appliances (2a, 2c, 2e).

5. Home automation system according to Claim 4, wherein, if none of the domestic electrical appliances (2a, 2b, 2c, 2d, 2e) of the network receive a radio-frequency signal transmitted by the mobile terminal (3), in the control zone (1), during a determined period, then each of the heating and/or air conditioning appliances (2a, 2c, 2e) changes its operating state.

6. Home automation system according to one of Claims 4 or 5, wherein:
- one or more other mobile terminals is/are adapted to transmit and receive radio-frequency signals in the control zone (1);
- all the mobile terminals are associated with a priority ranking relative to each of the heating and/or air conditioning appliances (2a, 2c, 2e);
- the control of the operation of each heating and/or air conditioning appliance (2a, 2c, 2e) is based on the priority rankings of the mobile terminals.

7. Home automation system according to any of Claims 1 to 3, wherein the radio-frequency signal transmitted by the mobile terminal (3) is initiated manually by the user of said terminal.

8. Home automation system according to any of Claims 1 to 3, wherein:
- each domestic electrical appliance (2a, 2b, 2c, 2d, 2e) of the network is adapted to transmit and receive radio-frequency signals in a transmission/reception zone (Z2a, Z2b, Z2c, Z2d, Z2e) that is specific thereto;
- the domestic electrical appliances (2a, 2b, 2c, 2d, 2e) of the network are programmed to continuously or periodically transmit requests containing activation information designed to be recognized by the mobile terminal (3) so that, when said terminal enters one of the transmission/reception zones (Z2a, Z2b, Z2c, Z2d, Z2e), then said terminal receives said requests;
- if the mobile terminal (3) recognizes the activation information, then said terminal automatically transmits a radio-frequency signal containing the commands for controlling the operation of the heating and/or air conditioning appliances (2a, 2c and 2e).

9. Home automation system according to any of Claims 1 to 8, wherein the first appliance is the appliance receiving the radio-frequency signal transmitted by the mobile terminal (3) with the highest intensity.

10. Home automation system according to any of Claims 1 to 9, wherein each domestic electrical appliance (2a, 2b, 2c, 2d, 2e) integrates a processor (23) and a memory (24), in which one or more programs is/are stored, the instructions of which programs, when they are executed by said processor, allow operating data specific to the appliance to be determined, such as the activation periods of said appliance, and/or the energy consumption of said appliance, which data are stored in said memory.

11. Home automation system according to Claim 10, wherein:
- the radio-frequency signal transmitted by the mobile terminal (3), in the control zone (1), contains a request (Rq) ;
- in response to the reception of the radio-frequency signal transmitted by the mobile terminal (3), the first domestic electrical appliance (2a) that receives said signal with the highest intensity and/or that is located in the transmission/reception zone (Z3) of said mobile terminal transmits a radio-frequency signal in the network, said signal containing a request identical or similar to that contained in the radio-frequency signal transmitted by the mobile terminal (3);
- in response to the reception of the radio-frequency signal transmitted by the first domestic electrical appliance (2a), the other domestic electrical appliances (2b, 2c, 2d, 2e) transmit radio-frequency signals, in the network and to said first appliance, containing the data stored in their memories (24);
- in response to the reception of all the data stored in the memories (24) of the other domestic electrical appliances (2b, 2c, 2d, 2e), the first domestic electrical appliance (2a) transmits, to the mobile terminal (3), said data received from said other appliances, as well as the data stored in its own memory (24) .
